# EUROPÄISCHE PATENTANMELDUNG

(11) **EP 1 202 195 A1**
(43) Veröffentlichungstag der Anmeldung: **02.05.2002**
(21) Anmeldenummer: 00121007.9
(22) Anmeldetag: 27.09.2000
(51) Int. Cl.: G06F 17/60, G07F 7/10, G07F 19/00

(54) **Verfahren zur gesicherten Durchführung einer Transaktion im elektronischen Zahlungsverkehr**

(71) Anmelder: H.A.S.E. Hamburger Anwendungs- & Systementwicklung GmbH & Co.KG, 22089 Hamburg (DE)
(72) Erfinder: Riecken, Bert, 22761 Hamburg (DE); Wilkens, Helge, 22083 Hamburg (DE); Massmann, Martin, 22043 Hamburg (DE)
(74) Vertreter: Meyer, Ludgerus A.

(57) **Zusammenfassung**

Die Erfindung betrifft ein Verfahren zur gesicherten Durchführung einer Transaktion im elektronischen Zahlungsverkehr, insbesondere im Internet, bei dem von einem Kunden über das Internet abrufbares Angebot eines Anbieters zur Ausführung eines Auftrags gelangt. Erfindungsgemäß wird in automatisierter Abfolge eine Schlüsselinformation vom Anbieter an den Kunden übertragen, die zusammen mit Zahlungsinformationen des Kunden über eine übliche Online-Banking-Software an das Kreditinstitut des Kunden übermittelt wird. Mittels eines zentralen Servers (4) wird die vom Kreditinstitut empfangene Schlüsselinformation mit einem vom Anbieter ebenfalls an den Server übertragenen zweiten Schlüsselinformation verglichen und bei Übereinstimmung dieser Schlüsselinformationen wird die Transaktion durch das Kreditinstitut ausgeführt. Eine Bestätigung der Ausführung der Zahlung wird über den zentralen Server an den Anbieter vermittelt, der damit in der Lage ist, einen Auftrag auszuführen, nachdem sichergestellt ist, daß die vereinbarte Zahlung ausgeführt wurde.

## Beschreibung

Die Erfindung betrifft ein Verfahren zur gesicherten Durchführung einer Transaktion im elektronischen Zahlungsverkehr, insbesondere im Internet, nach dem Oberbegriff des Anspruchs 1.

Es ist bekannt, Zahlungsaufträge durch Datenübertragung vom Computer eines Nutzers an ein Kreditinstitut zu übertragen. Hierfür wird in der Regel ein spezielles Programm verwendet (electronic banking), das auf dem Rechner des Nutzers installiert ist, und das einen Zahlungsauftrag in standardisierter Form an ein Kreditinstitut weiterleitet, das den Zahlungsauftrag in Empfang nimmt und ausführt, sofern auf dem Konto des Nutzers entsprechende Mittel vorhanden sind.

Während noch vor wenigen Jahren electronic banking in der Regel über das BTX-System der Telekom ausgeführt wurde, ist es heute üblich geworden, electronic banking über Internetverbindungen zwischen Nutzer und Kreditinstitut abzuwickeln. Zur Sicherung der Datenübertragung werden Verschlüsselungstechniken verwendet, die gegen unberechtigte Angriffe weitestgehend resistent sind.

Mit der Verbreitung des Internet sind viele Anbieter von Waren oder Dienstleistungen, die einen durch Kunden abrufbaren Server betreiben, dazu übergegangen, dem Kunden Bestellmöglichkeiten für die angebotenen Waren und Dienstleistungen über Internet zu bieten. Bei derartigen sogenannten "Shop"-Lösungen haben Kunden die Möglichkeit, durch den sogenannten Browser ihres Computers die vom Anbieter im Internet präsentierten Internetseiten aufzurufen. Wenn der Kunde eine Ware oder eine Dienstleistung wünscht, kann er auf einer Bestellseite des Anbieters die gewünschte Ware oder Dienstleistung, deren Menge und ggf. weitere Daten in ein Formular eintragen und mit den persönlichen Daten des Kunden versehen als Bestellung deklarieren. Der Anbieter kann dann diesen Auftrag ausführen, indem die Ware ausgeliefert wird oder die Dienstleistung erbracht wird. Umgekehrt ist der Kunde verpflichtet, die Ware oder Dienstleistung dem Anbieter zu bezahlen.

Während die Auslieferung einer Ware oder die Ausführung einer Dienstleistung in der Regel keine Probleme bereitet, ist die Sicherung einer Bezahlung der bestellten Ware oder Dienstleistung bis heute ein Problem geblieben. Viele Anbieter liefern Ware daher nur gegen gleichzeitige Bezahlung aus, was jedoch voraussetzt, daß der Kunde im Lieferungszeitpunkt anwesend ist.

Eine andere Möglichkeit der Bezahlung einer Ware oder Dienstleistung liegt in der Verwendung des Kreditkartensystems, bei dem der Kunde dem Anbieter die relevanten Daten seiner Kreditkarte zur Verfügung zu stellen hat. Bei einer Übertragung von Kreditkartendaten über das Internet besteht jedoch leicht die Gefahr des Abfangens der Kreditkartendaten durch unbefugte Dritte, so daß ein sicherer Zahlungsverkehr damit nicht gewährleistet ist. Die Nutzung einer Kreditkarte erfordert außerdem Kreditfähigkeit des Kunden.

Es ist ein weiteres System zur Zahlung von Leistungen bekannt geworden, bei dem die Sicherung der Zahlung durch Abfrage von Codenummern über eine Mobilfunkverbindung erfolgt. Diese Art der Bezahlung setzt jedoch die gleichzeitige Nutzung einer Mobilfunkverbindung voraus. Bei einem Diebstahl des Handys kann dieses somit auch mißbräuchlich für Zahlungszwecke verwendet werden.

Der Erfindung liegt die Aufgabe zugrunde, ein Verfahren zur gesicherten Durchführung einer Transaktion im elektronischen Zahlungsverkehr, insbesondere im Internet, anzugeben, das eine gegen Mißbrauch weitestgehend resistente Ausführung eines Zahlungsvorgangs bei Bestellung einer Ware oder Dienstleistung im elektronischen Zahlungsverkehr, insbesondere im Internet, ermöglicht.

Diese Aufgabe wird durch die im Anspruch 1 angegebene Erfindung gelöst. Vorteilhafte Weiterbildungen der Erfindung sind in Unteransprüchen angegeben.

Nach der Erfindung wird ein Verfahren zur gesicherten Durchführung einer Transaktion im elektronischen Zahlungsverkehr, insbesondere im Internet, angegeben bei dem ein von einem Kunden über das Internet abrufbares Angebot eines Anbieters zur Ausführung eines Auftrags gelangt. Erfindungsgemäß werden in automatisierter Abfolge folgende Verfahrensschritte durchgeführt:
1. Durch die Annahme eines Angebots durch den Kunden wird mittels Computer des Anbieters ein Identifikationsdatensatz erzeugt, der eine erste Schlüsselinformation enthält und der an den Computer des Kunden übermittelt wird.
2. Unter Verwendung des Identifikationsdatensatzes wird mittels des Computers des Kunden ein elektronischer Überweisungsdatensatz eines an sich bekannten elektronischen Zahlungssystems (electronic banking) erzeugt, welcher zusammen mit der ersten Schlüsselinformation an den Computer eines Kreditinstituts übermittelt wird.
3. Der Computer des Kreditinstituts übermittelt die erste Schlüsselinformation an einen zentralen Server.
4. Der Server vergleicht die vom Kreditinsitut erhaltene erste Schlüsselinformation mit einer entsprechend vom Computer des Anbieters an den Server übertragenen zweiten Schlüsselinformation.
5. Bei Übereinstimmung der erhaltenen Schlüsselinformationen übermittelt der Server ein Bestätigungssignal an den Computer des Anbieters zur Durchführung des Auftrags und ein Ausführungssignal an das Kreditinstitut zur Vervollständig der Zahlungstransaktion.

Zusammengefaßt verwendet die Erfindung daher zur Durchführung einer Zahlung aufgrund einer Bestellung eines Kunden das beim Kunden üblicherweise vorhandene electronic banking-Programm, um die zahlungsrelevanten Daten an das Kreditinstitut des Kunden zu übermitteln. Diese Verbindung gilt als sicher. Zwischen Computer des Anbieters und Computer des Kunden werden lediglich bestellrelevante Daten übermittelt, welche für Dritte vergleichsweise wertlos sind. Die darin enthaltene Schlüsselinformation wird vom Kreditinstitut an einen zentralen Server übermittelt, welcher durch Kontakt mit dem Anbieter eine Zahlung des Kunden verifiziert und dem Anbieter bestätigt, so daß dieser einen Auftrag zur Lieferung einer Ware oder Ausführung einer Dienstleistung ausführen kann.

Durch die Erfindung wird ein gegenüber bekannten Verfahren weitaus sichereres Zahlungssystem für Internettransaktionen angegeben, das allein durch Rechnerkommunikation in automatisierter Abfolge ausgeführt werden kann, ohne daß eine Manipulationsmöglichkeit des Zahlungsverkehrs durch Dritte, oder auch den Kunden, möglich ist.

Um vorzugsweise sicherzustellen, daß die vom Computer des Kreditinstituts an den zentralen Server übermittelte erste Schlüsselinformation dort empfangen wurde, versendet der zentrale Server ein Bestätigungssignal an den Computer des Kreditinstituts.

Der Computer des Kreditinstituts übermittelt vorzugsweise nach Erhalt des elektronischen Überweisungsdatensatzes vom Kunden eine Empfangsbestätigung an den Computer des Kunden, und der Computer des Kunden sendet vorzugsweise ein weiteres Bestätigungssignal an den Computer des Anbieters, bevor der Computer des Anbieters die zweite Schlüsselinformation an den zentralen Server übermittelt.

Vorzugsweise enthält das Ausführungssignal die zweite Schlüsselinformation und der Computer des Kreditinstituts führt nach Erhalt der zweiten Schlüsselinformation und Vergleich mit den zwischengespeicherten Transaktionen den elektronischen Überweisungsdatensatz aus und bestätigt ihn gegenüber dem zentralen Server, der die Bestätigung an den Computer des Anbieters weiterleitet.

Die bei der Erfindung verwendete Schlüsselinformation enthält vorzugsweise folgenden Daten:
- Identifikationscode des Auftrags,
- Bankverbindung des Anbieters.

Zusammen mit weiteren Daten, die wenigstens den Rechnungsbetrag und die Währung enthalten, wird so der Identifikationsdatensatz gebildet.

In weiterer Ausgestaltung der Erfindung enthält der zentrale Server eine Datenbank, über die eine Zuordnung der vom Computer des Anbieters erhaltenen zweiten Schlüsselinformation zu Zugangsdaten einer Vielzahl von Kreditinstituten erfolgt.

Dies hat den Vorteil, daß die jeweiligen Anbieter lediglich eine Kommunikationsverbindung zum Kunden sowie zu einem zentralen Server aufzubauen haben. Eine unmittelbare Verbindung zum Kreditinstitut des Kunden ist für den Anbieter nicht erforderlich. Für den Anbieter ergibt sich die Sicherheit, daß der zentrale Server und die beteiligten Kreditinstitute als legitimiert betrachtet werden können.

Die Erfindung wird nachstehend anhand eines Ausführungsbeispiels näher erläutert. In zwei schematischen Darstellungen sind einerseits die Komponenten und Verbindungen des Zahlungssystems sowie ein Ablaufdiagramm einer Transaktion dargestellt.

Die nachstehend genannte Bezeichnung IPOB ist eine Abkürzung von "Internet Payment via Online Banking".

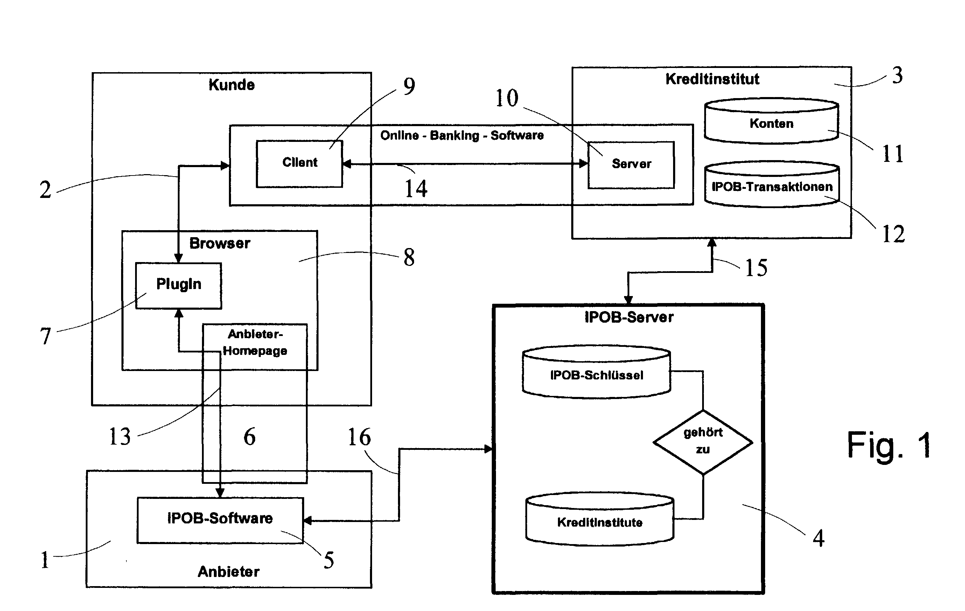

In der schematischen Darstellung der Fig. 1 kennzeichnet die Ziffer 1 den Computer des Anbieters, der mit einer sogenannten IPOB-Software 5 geladen ist, welche die Erstellung und Übermittlung der Schlüsselinformation steuert. Über eine Internetverbindung 13 zwischen Computer des Kunden und Computer des Anbieters wird eine Kommunikationsverbindung zwischen Anbieter und Kunde hergestellt. Der Computer des Kunden enthält einen Browser, der es ermöglicht, die Homepage 6 des Anbieters einzusehen.

Auf dem Computer des Kunden ist ferner die Client-Seite einer Online-Banking-Software geladen, welche in Kommunikationsverbindung 14 mit der Serverseite 10 der Software steht, welche im Computer 3 des Kreditinstituts geladen ist.

Die Serverseite 10 hat Zugang zu den Konten 11 der Kunden. Ferner enthält der Computer des Kreditinstituts einen Zwischenspeicher 12 für IPOB-Transaktionen. Über die Datenverbindung 15 zwischen Computer des Kreditinstituts und einem zentralen IPOB-Server 4 werden die ersten Schlüsselinformationen übertragen. Schließlich besteht eine Kommunikationsverbindung 16 zwischen dem Computer des Anbieters und dem zentralen Server 4.

Die Kommunikationsverbindungen können permanente oder geschaltete Verbindungen sein, die gleichzeitig oder in zeitlichem Abstand aufgebaut oder beendet werden können. Anstelle einer Kommunikationsverbindung im Bereich des Internet können auch sonstige elektronische Kommunikationsverbindungen einschließlich drahtloser Verbindungen genutzt werden.

Um das erfindungsgemäße Verfahren auszuführen, ist es erforderlich, daß der Browser des Kunden ein zusätzliches Plugin 7 enthält, sofern der Browser nicht von Haus aus ein entsprechendes Softwaremodul enthält. Die Software 5 des Anbieters weist Schnittstellen zum Plugin 7 des Browsers 8 des Computer 2 des Kunden auf.

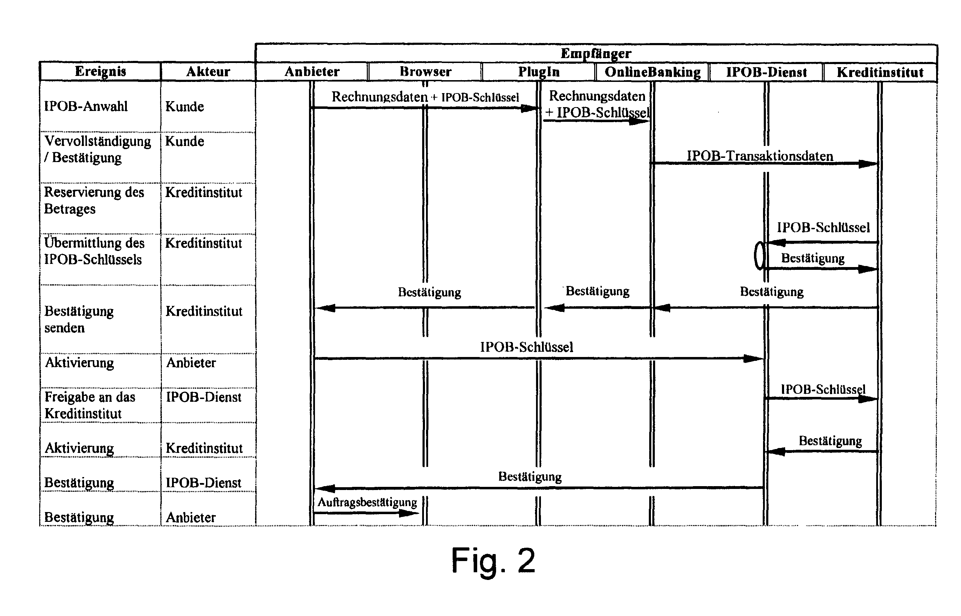

Anhand des in Fig. 2 angegebenen Schemas wird die Durchführung des Verfahrens im folgenden erläutert:

Über den Computer 2 des Kunden wird zunächst eine Kommunikationsverbindung über das Internet mit der Homepage 6 des Anbieters hergestellt. Der Kunde wählt das gewünschte Angebot je nach Vorgabe des Anbieters aus, wobei beispielsweise die Auswahl dadurch erfolgt, daß der Kunde die gewünschte Ware oder Dienstleistung in einen sogenannten Warenkorb überführt. Nach Ende des Auswahlvorgangs wird der Kunde auf eine Seite mit Zahlungsmodalitäten gelenkt. Der Kunde kann dort diverse Daten eingeben, beispielsweise Lieferanschrift, Liefertermin, Zahlungsart, etc. Der Computer 1 des Anbieters prüft bei Auswahl der erfindungsgemäßen Zahlungssysteme über die Kommunikationsverbindung 13, ob der Computer 2 des Kunden das Plugin 7 geladen hat. Sofern dies nicht der Fall ist, kann das Plugin vom Anbieter an den Computer 2 des Kunden übertragen werden, so daß es nach Abschluß der Übertragung zur Nutzung zur Verfügung steht.

Sofern das Plugin bereits vorhanden ist, überträgt die IPOB-Software 5 einen Identifikationsdatensatz an den Computer 2 des Kunden. Dieser Datensatz enthält beispielsweise neben einer ersten Schlüsselinformation, die vorzugsweise aus der Auftragsnummer, die der Anbieter für den Auftrag vergibt, und der Bankverbindung des Anbieters besteht, den Rechnungsbetrag und die Währung. Zwischen Anbieter und Kunde werden daher keine sicherheitsrelevanten Daten des Kunden übertragen oder verwendet.

Die erste Schlüsselinformation, auch als IPOB-Schlüssel bezeichnet, wird nun vom Plugin 7 des Browsers des Computers 2 über eine Schnittstelle an die Client-Seite 9 einer Online-Banking-Software übermittelt. Sofern die Online-Banking-Software des Kunden noch nicht aktiviert ist, kann das Plugin 7 diese Software aktivieren. Dadurch wird automatisch ein sogenanntes Formular in der Online-Banking-Software erzeugt, das etwa einem Überweisungsformular entspricht und durch die Schlüsselinformation, die der Anbieter an den Kunden übertragen hat, vorbelegt wird. Die eingetragenen Daten können vom Kunden, sofern das Formular auf dem Bildschirm angezeigt wird, kontrolliert werden und ggf. durch eigene Daten ergänzt werden. Die vom Anbieter bereitgestellten Schlüsselinformation kann durch den Kunden jedoch nicht geändert werden.

Der Kunde kann nun die Transaktion im Banksystem freigeben. Damit werden die Schlüsselinformation und die kundenspezifischen Daten über die Kommunikationsverbindung 14 vom Computer 2 des Kunden an den Computer 3 des Kreditinstituts übertragen. Die Transaktion wird vom Kreditinstitut dem Kunden 11 zugeordnet, jedoch noch nicht ausgeführt, sondern in 12 zwischengespeichert. Der Computer 3 des Kreditinstituts überträgt nun die aus dem Überweisungsdatensatz extrahierte Schlüsselinformation über die Kommunikationsverbindung 15 an einen zentralen Server, auch IPOB-Server genannt. Der zentrale Server 4 übermittelt an den Computer 3 des Kreditinstituts ein Bestätigungssignal. Ferner überträgt der Computer 3 des Kreditinstituts ein Empfangsbestätigungssignal an den Computer des Kunden und dieser überträgt ein entsprechendes Bestätigungssignal an den Computer 1 des Anbieters.

Sobald das Bestätigungssignal des Kunden beim Anbieter angelangt ist, oder auch vorher, wird die Schlüsselinformation erneut aktiviert und als zweite Schlüsselinformation über eine Kommunikationsverbindung 16 an den zentralen IPOB-Server übermittelt. Dort wird die vom Kreditinstitut erhaltene erste Schlüsselinformation mit der nun empfangenen zweiten Schlüsselinformation verglichen und bei Übereinstimmung der beiden Schlüsselinformationen wird die Schlüsselinformation oder ein einfaches Bestätigungssignal vom zentralen Server 4 an das Kreditinstitut 3 übermittelt. Durch dieses Signal wird der Computer des Kreditinstituts dazu veranlaßt, die zwischengespeicherte Transaktion auszuführen und dem Kunden zu bestätigen. Ferner bestätigt das Kreditinstitut dem zentralen Server die Ausführung der Transaktion, und der zentrale Server übermittelt eine entsprechende Information an den Computer des Anbieters. Damit ist für den Computer 1 des Anbieters die Transaktion ausgeführt und der Auftrag kann dem Kunden bestätigt und auftragsgemäß ausgeführt werden.

Der zentrale Server enthält eine Software, welche eine Datenbank steuert, die die Daten aller beteiligten Kreditinstitute enthält. Über die Schlüsselinformation wird eine Zuordnung zu einem bestimmten Kreditinstitut hergestellt. In einer alternativen Ausführungsform könnte der zentrale Server auch als Routing-Dienst fungieren und damit eine quasi unmittelbare Verbindung zwischen Computer des Anbieters und Kreditinstitut herstellen.

Die Schlüsselinformation dient ausschließlich der Identifizierung einer Transaktion in der Kommunikation im erfindungsgemäßen Zahlungssystem. Eine Eindeutigkeit im Bezug auf die zugehörige Anbieterrechnung, Überweisung bzw. Bankverbindung kann beispielsweise dadurch sichergestellt werden, daß der Informationsschlüssel die Bankleitzahl, Kontonummer und Auftragsnummer des Anbieters enthält.

Die im zentralen Server abgelegte Datenbank zur Verwaltung der Zugangsdaten der Kreditinstitute enthält vorzugsweise die IP-Adressen, sofern eine Verwendung übers Internet erfolgt, eine Netzwerkadresse oder eine Leitungsadresse (bei einer Standleitung) oder eine Telefonnummer für eine telefonische Verbindung.

Die beim System der Erfindung verwendeten Computer stehen zur Ausführung der Transaktion in Kommunikationsverbindungen, welche grundsätzlich keine manuellen Eingaben erfordern. Damit ist eine hohe Sicherheit gegen Manipulation gewährleistet. Eine Sicherung gegen Manipulation durch den Kunden ist dadurch gewährleistet, daß die Bestätigung einer Transaktion nicht über den Computer des Kunden erfolgt, sondern über einen zentralen Server, der für den Kunden unzugänglich ist. Eine Manipulationsmöglichkeit durch Dritte wird dadurch verhindert, daß sicherheitsrelevante Daten des Kunden ausschließlich über eine gesicherte Verbindung, beispielsweise einer üblichen Online-Banking-Software übermittelt wird.

Der Anbieter erhält ebenfalls keine Informationen des Kunden über dessen Kontonummer, Kreditinstitut o.ä., da der Anbieter über den zentralen Server lediglich eine Information erhält, daß die Zahlung ausgeführt wurde.

### Bezugszeichenliste

- 1: Anbieter-Computer
- 2: Kunden-Computer
- 3: Kreditinstitut-Computer
- 4: zentraler Server
- 5: IPOB-Software
- 6: Homepage des Anbieters
- 7: Plugin
- 8: Browser
- 9: Client-Seite der Online-Banking-Software
- 10: Server-Seite der Online-Banking-Software
- 11: Konten vom Kunden
- 12: IPOB-Transaktionen
- 13: Datenverbindung Kunde-Anbieter
- 14: Datenverbindung Kunde-Kreditinstitut
- 15: Datenverbindung Kreditinstitut-zentraler Server
- 16: Datenverbindung zentraler Server-Anbieter

## Patentansprüche

1. Verfahren zur gesicherten Durchführung einer Transaktion im elektronischen Zahlungsverkehr, insbesondere im Internet, bei dem ein von einem Kunden abrufbares Angebot eines Anbieters zur Ausführung eines Auftrags gelangt, indem in automatisierter Abfolge folgende Verfahrensschritte durchgeführt werden:
a) durch die Annahme des Angebots des Kunden wird mittels Computer (1) des Anbieters ein Identifikationsdatensatz erzeugt, der eine erste Schlüsselinformation enthält und an den Computer (2) des Kunden übermittelt,
b) unter Verwendung des Identifikationsdatensatzes wird mittels des Computers (2) des Kunden ein elektronischer Überweisungsdatensatz eines an sich bekannten elektronischen Zahlungssystems (electronic banking) erzeugt, welcher zusammen mit der ersten Schlüsselinformation an den Computer (3) eines Kreditinstituts des Kunden übermittelt wird,
c) der Computer (3) des Kreditinstituts übermittelt die erste Schlüsselinformation an einen zentralen Server (4),
d) der zentrale Server (4) vergleicht die vom Computer des Kreditinstituts erhaltene erste Schlüsselinformation mit einer entsprechend vom Computer (1) des Anbieters an den zentralen Server (4) übertragenen zweiten Schlüsselinformation,
e) bei Übereinstimmung der enthaltenen Schlüsselinformationen übermittelt der zentrale Server (4) ein Bestätigungssignal an den Computer (1) des Anbieters zur Durchführung des Auftrags und ein Ausführungssignal an den Computer (3) des Kreditinstituts zur Vervollständigung der Zahlungstransaktion.

2. Verfahren nach Anspruch 1, **dadurch gekennzeichnet, daß** der zentrale Server (4) nach Erhalt der ersten Schlüsselinformation vom Computer (3) eines Kreditinstituts ein Bestätigungssignal an den Computer des Kreditinstituts übermittelt.

3. Verfahren nach Anspruch 1 oder 2, **dadurch gekennzeichnet, daß** der Computer (3) des Kreditinstituts nach Erhalt des elektronischen Überweisungsdatensatzes ein Empfangssignal an den Computer (2) des Kunden übermittelt und der Computer (2) des Kunden ein weiteres Bestätigungssignal an den Computer (1) des Anbieters übermittelt, bevor der Computer (1) des Anbieters die zweite Schlüsselinformation an den zentralen Server übermittelt.

4. Verfahren nach Anspruch 1, 2 oder 3, **dadurch gekennzeichnet, daß** das Ausführungssignal die zweite Schlüsselinformation enthält, und daß der Computer des Kreditinstituts nach Erhalt der zweiten Schlüsselinformation den elektronischen Überweisungsdatensatz ausführt und gegenüber dem Computer des Kunden bestätigt.

5. Verfahren nach einem der Ansprüche 1 - 4, **dadurch gekennzeichnet, daß** die Schlüsselinformation einen Datensatz mit wenigstens folgenden Daten enthält:
a) Identifikationscode des Auftrags,
b) Bankverbindung des Anbieters.

6. Verfahren nach einem der vorhergehenden Ansprüche, **dadurch gekennzeichnet, daß** der zentrale Server (4) eine Datenbank enthält, über die eine Zuordnung der vom Computer des Anbieters erhaltenen zweiten Schlüsselinformation zu Zugangsdaten einer Vielzahl von Kreditinstituten erfolgt.
